# EUROPÄISCHE PATENTSCHRIFT

(11) **EP 2 712 412 B1**
(45) Veröffentlichungstag und Bekanntmachung des Hinweises auf die Patenterteilung: **13.02.2019**
(21) Anmeldenummer: 11775760.9
(22) Anmeldetag: 21.10.2011
(51) Int. Cl.: F16H 25/20, F16H 57/04

(54) **ELEKTROMECHANISCHER LINEARANTRIEB MIT NACHSCHMIEREINRICHTUNG**
ELECTROMECHANICAL LINEAR DRIVE HAVING A RELUBRICATING DEVICE
ENTRAÎNEMENT LINÉAIRE ÉLECTROMÉCANIQUE AVEC DISPOSITIF DE POST-LUBRIFICATION

(30) Priorität: 09.09.2010 DE 102010044793
(43) Veröffentlichungstag der Anmeldung: 02.04.2014
(73) Patentinhaber: Parker Hannifin GmbH, 33659 Bielefeld (DE)
(72) Erfinder: GEPPERT, Andreas, 77948 Friesenheim (DE); KULLICK, Jochen, 77652 Offenburg (DE)
(74) Vertreter: Feucker, Max Martin
(86) Internationale Anmeldenummer: PCT/EP2011/068470
(87) Internationale Veröffentlichungsnummer: WO 2012/045891

(56) Entgegenhaltungen:
- EP-A1- 0 601 185
- EP-A1- 1 647 740
- EP-A1- 2 251 567
- DE-A1- 4 340 078
- US-B2- 7 141 752

## Beschreibung

Die Erfindung betrifft einen elektromechanischer Linearantrieb mit einem Gehäuse und mit wenigstens einer in einem Gehäuseinnenraum längsverschiebbar angeordneten Spindelmutter als Träger eines daran befestigten Funktionsteiles, wobei die Spindelmutter auf einer sich durch den Gehäuseinnenraum erstreckenden, mittels eines Antriebes in eine Drehbewegung versetzbaren Gewindespindel sitzt und durch die Drehbewegung der Gewindespindel in dem Gehäuseinnenraum hin und her verschiebbar ist, wobei in einem einen Endanschlag für die Bewegung der Spindelmutter ausbildenden Gehäusebereich ein an der Außenseite des Gehäuses zugänglicher Schmiernippel und wenigstens ein daran anschließender und in einer im Gehäuseinnenraum gelegenen Anschlagfläche für die Spindelmutter mündender Schmierweg angeordnet sind und in der Spindelmutter wenigstens eine zu den Schmierstellen der Spindelmutter führende Schmierleitung angeordnet ist.

Ein elektromechanischer Linearantrieb zur Erzeugung translatorischer Vorschubbewegungen ist aus der DE 10 20 663 A1 bekannt, wobei das von der Spindelmutter getragene Funktionsteil aus wenigstens einer einen stirnseitigen Gehäusedeckel des Gehäuses durchgreifenden, aus dem Gehäuse einseitig hervorstehenden Kolbenstange besteht. Soweit die entsprechende Vorschubbewegung durch die Verschiebung einer Spindelmutter längs einer Gewindespindel bewirkt und insoweit für die Bewegung der Spindelmutter längs der Gewindespindel eine Schmierung, vorzugsweise Fettschmierung, einzurichten ist, weist die Spindelmutter einen in ihr ausgebildeten Schmierweg auf, der in einen an dem äußeren Umfang der Spindelmutter ausgebildeten Schmiernippel mündet. An dem die Spindelmutter umschließenden Gehäuse ist ein von außen zugänglicher Schmieradapter angebracht. Zur Ausführung des Schmiervorganges müssen daher Schmiernippel der Spindelmutter und gehäusefester Schmieradapter jeweils in eine miteinander fluchtende Lage gebracht werden. In nachteiliger Weise erfordert dies einen zusätzlichen Aufwand und steht auch einer automatisch durchzuführenden Nachschmierung entgegen.

Darüber hinaus ergibt sich aus der JP 11287305 A ein Linearantrieb mit einer Kugelgewindespindel und einer Kugelumlaufmutter, wobei einerseits in der Spindelmutter eine Schmierleitung und im zugehörigen Sockel ein Schmiernippel mit einem an den Schmiernippel anschließenden und in einer Kontaktfläche zur Spindelmutter mündenden Schmiermittelweg ausgebildet sind, wobei die Schmierleitung der Spindelmutter an den sockelseitigen Schmierweg angeschlossen ist. Eine Relativbewegung der Spindelmutter zum Sockel ist nicht vorgesehen, so dass die hergestellte Schmierverbindung ständig aufrechterhalten ist.

Ein elektromechanischer Linearantrieb mit den eingangs genannten Merkmalen ist aus US7,141,752 B2 bekannt, wobei der Schmierweg in dem Gehäuse permanent mittels eines Schlauchs mit der Schmierleitung in der Spindelmutter verbunden ist. Bei einer solchen Ausgestaltung ist allerdings ein zusätzliches Bauteil in Form des Schlauches erforderlich, welches aufgrund der Belastung während des Verfahrens der Spindelmutter regelmäßig gewartet und bei Beschädigung ausgetauscht werden muss.

Der Erfindung liegt die Aufgabe zugrunde, einen elektromechanischen Linearantrieb der eingangs genannten Art weiter zu entwickeln.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, dass die Spindelmutter für die Nachschmierung in eine durch die Anschlagfläche definierte Position zu verfahren ist, in welcher die Schmierleitung bei Anlage der Spindelmutter an der Anschlagfläche des Gehäuses an dem gehäuseseitigen Schmierweg angeschlossen ist und automatisch eine Verbindung zwischen der in der Spindelmutter ausgebildeten Schmierleitung und dem gehäuseseitigen Schmierweg besteht.

In der entsprechenden Stellung der Spindelmutter an der Anschlagfläche kann zunächst das Einbringen von Schmierfett von Hand durch Einpressen in den Schmiernippel erfolgen, wobei der Aufwand für die Nachschmierung jedoch bereits reduziert ist.

Es ist aber nach einem Ausführungsbeispiel der Erfindung auch vorgesehen, dass an dem im Gehäusebereich angeordneten Schmiernippel eine automatisch arbeitende Schmiervorrichtung anschließbar ist. Hierdurch kann der gesamte Ablauf des Nachschmiervorganges in einen Zusammenhang gebracht und gesteuert werden, indem die Spindelmutter in ihre Endstellung mit Anlage an der Anschlagfläche verfahren und das Schmierfett über den Schmiernippel in den Schmierweg des Gehäusebereichs und damit auch in die Schmierleitung der Spindelmutter eingepresst wird. Damit ist auch die Möglichkeit eröffnet, die Nachschmierzyklen in zweckmäßiger Weise vorzugeben. So kann nach einer bestimmten Anzahl von Hüben der Spindelmutter die Spindelmutter automatisch in ihre zugeordnete Endstellung verfahren und eine an dem Schmiermittel angeschlossene automatisch arbeitende Nachschmiervorrichtung angesteuert werden, oder es kann ein zeitlicher Abstand für die einzelnen Nachschmiervorgänge in einer zugeordneten Steuerung vorgegeben sein.

Nach einem Ausführungsbeispiel der Erfindung kann vorgesehen sein, dass die Anschlagfläche für die Spindelmutter an einer gesonderten, an einer Stirnseite des die Spindelmutter aufnehmenden Gehäuseinnenraums in das Gehäuse eingesetzten Pufferscheibe ausgebildet und in der Pufferscheibe eine Verbindungsbohrung zur Verbindung des im Gehäusebereich ausgebildeten Schmierwegs mit der in der Spindelmutter ausgebildeten Schmierleitung angeordnet ist.

Die Erfindung lässt sich in vorteilhafter Weise bei der in der gattungsbildenden DE 10 2004 058 935 A1 beschriebenen Bauart eines Linearantriebs verwirklichen, bei welcher das von der Spindelmutter getragene Funktionsteil aus wenigstens einer einen stirnseitigen Gehäusedeckel, des Gehäuses durchgreifenden, aus dem Gehäuse einseitig hervorstehenden Kolbenstange besteht.

Gemäß einer Ausführungsform der Erfindung ist vorgesehen, dass der Schmiernippel in dem dem die Kolbenstange aufnehmenden Gehäusedeckel gegenüberliegenden Gehäusebereich angeordnet ist. Je nach Einsatz und Ausbildung des elektromechanischen Linearantriebs ist es aber auch nicht ausgeschlössen, die Nachschmiereinrichtung in dem den stirnseitigen und die Kolbenstange aufnehmenden Gehäusedeckel aufweisenden Gehäusebereich anzuordnen.

In einer alternativen Ausführungsform der Erfindung kann vorgesehen, sein, dass das von der Spindelmutter getragene Funktionsteil aus einem auf einer Außenseite des Gehäuses beweglichen Läufer besteht, der mittels eines in den Gehäuseinnenraum reichenden Steges mit der Spindelmutter verbunden ist.

Hierbei kann im Einzelnen vorgesehen sein, dass das aus einem strangförmigen Gehäuseprofil bestehende Gehäuse an seinen beiden Enden durch einen stirnseitig an den Enden des Gehäuseprofils befestigten Flansch verschlossen ist und der Schmiernippel und der zur Anschlagfläche für die Spindelmutter führende Schmierweg in einem der beiden Flansche ausgebildet ist.

In der Zeichnung sind Ausführungsbeispiele der Erfindung wiedergegeben, welche nachstehend beschrieben sind. Es zeigen:
- Fig. 1: einen elektromechanischen Linearantrieb mit einer an einer Spindelmutter einseitig angeordneten Kolbenstange in einer Perspektivansicht bei geöffnetem Gehäuseinnenraum,
- Fig. 2: die Nachschmiereinrichtung des elektromechanischen Linearantriebs in einer vergrößerten Schnittansicht aus Figur 1,
- Fig. 3: eine andere Ausführungsform eines Linearantriebes mit einem an der Spindelmutter befestigten, auf einer Außenseite des Gehäuses beweglichen Läufer in einer Darstellung entsprechend Figur 1.

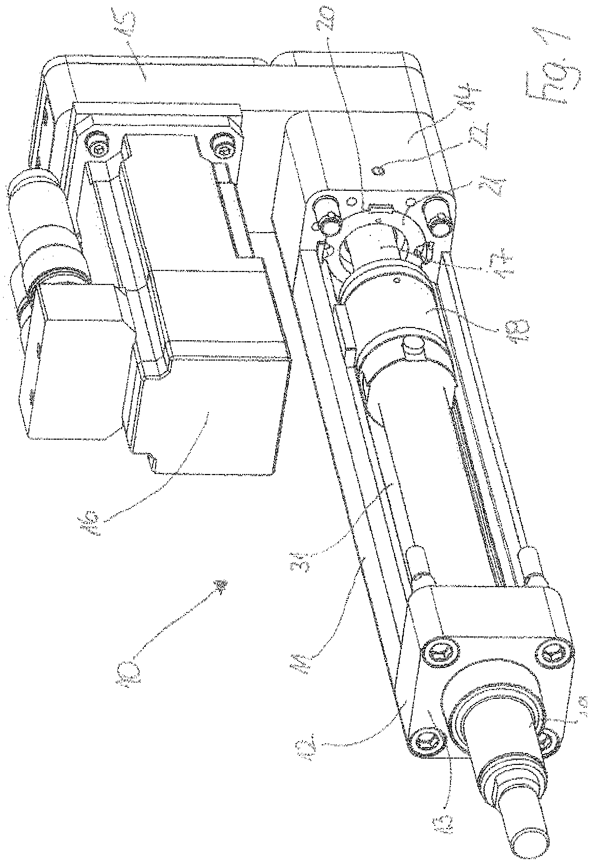

Der aus Figur 1. ersichtliche Linearantrieb 10 hat ein langgestrecktes Gehäuse 11, an dessen einer (linken) Seite ein Gehäusebereich 12 mit einem darin angeordneten Gehäusedeckel 13 angeordnet ist. Auf der gegenüberliegenden Seite des Gehäusedeckels 13 befindet sich ein Gehäusebereich 14 mit einem daran angesetzten Getriebegehäuse 15, an dem in einer zum langgestreckten Gehäuse 11 parallelen Anordnung ein Elektromotor 16 angeflanscht ist. Mittels des Elektromotors 16 und des im Getriebegehäuse 15 angeordneten Getriebe wird eine in dem Gehäuseinnenraum 3] des langgestreckten Gehäuses 11 liegende Gewindespindel 17 angetrieben und in Drehung versetzt, auf der eine die Gewindespindel 17 umgreifende Spindelmutter 18 sitzt, die durch die Drehung der Gewindespindel 17 in dem Gehäuseinnenräum 31 hin und her bewegt wird. Auf ihrer dem Gehäusebereich 12 mit Gehäusedeckel 13 zugewandten Seite trägt die Spindelmutter 18 eine Kolbenstange 19, die den Gehäusedeckel 13 durchgreift, und die mit ihrem äußeren Ende beispielsweise eine Masse beziehungsweise einen Gegenstand beaufschlagt und diesen bewegt, In dem an das Getriebegehäuse 15 angeschlossenen Gehäusebereich 14 ist an der Stirnseite des die Spindelmutter 18 aufnehmenden Gehäuseinnenraums 31 eine Pufferscheibe 20 eingesetzt, die eine Anschlagfläche 21 für die Bewegung der Spindelmutter 18 ausbildet. Aus Figur 1 ist bereits der in dem Gehänsebereich 14 eingesetzte Schmiernippel 22 für die Durchführung von Nachschmiervorgängen erkennbar.

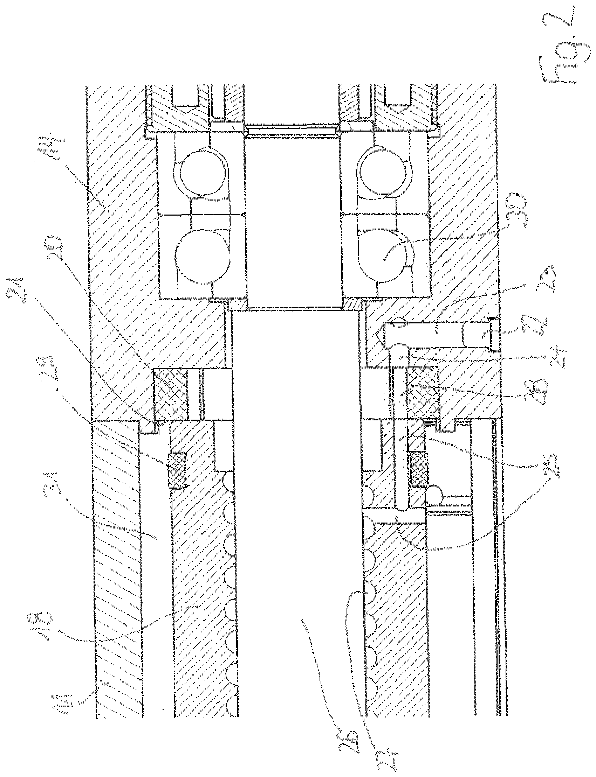

Wie sich hierzu aus Figur 2 näher ergibt, ist der Schmiernippel 22 in einer radial in dem Gehäusebereich 14 verlaufenden Bohrung 23 angeordnet, an deren Ende ein axial zum Gehäuseinnenraum 31 gerichteter Schmierkanal 24 anschließt, so dass in dem Gehäusebereich 14 ein entsprechender Schmierweg 23,24 ausgebildet ist.

Die Gewindespindel 17 weist ihrerseits eine von ihrer der Pufferscheibe 20 zugewandten Stirnseite ausgehende axiale Schmierleitung 25 auf, die in einen radial verlaufenden Schmierleitungsabschnitt 25 mündet. In der Darstellung der Figur 2 ist die von der Spindelmutter 18 umschlossene Gewindespindel 17 nicht im Schnitt, sondern lediglich schematisch als Rundkörper dargestellt, insoweit sind an der die Gewindespindel umschließenden Innenwandung der Spindelmutter 18 Kugelaufnahmen 27 ausgebildet, in die einzelne, mit dem Gewinde der Gewindespindel arbeitende Kugeln zur Ausbildung eines Kugelgewindespindelanteils eingelegt sind, welcher der Nachschmierung bedarf. Es ist erkennbar, dass die Schmierleitung 25 der Spindelmutter 18 und der Schmierkanal 24 des Gehäusebereichs 14 über eine die die Anschlagfläche 21 ausbildende Pufferscheibe 20 durchsetzende Verbindungsbohrung 28 miteinander verbunden sind. Aus Figur 2 ergibt sich weiterhin noch, dass die Spindelmutter 18 in ihrem Endbereich einen äußeren Gleitring 29 aufweist, und dass im Gehäusebereich 14 Kugellager 30 zur Lagerung der in Drehung versetzbaren Gewindespindel 17 angeordnet sind.

Aus Figur 2 ist erkennbar, dass eine Nachschmierung dann durchgeführt werden kann, wenn die Spindelmutter 18 in Anlage an der Anschlagfläche 21 der Pufferscheibe 20 steht, weil dann die axiale Schmierleitung 25 der Spindelmutter 18 mit der Verbindungsbohrung 28 in der Pufferscheibe 20 und weiter mit dem Schmierkanal 24 des Gehäusebereichs 14 fluchtet, so dass über den. Schmiernippel. 22 und die Bohrung 23 Schmierfett bis in die Kugelaufnahmen 27 der Gewindespindel 17 eingebracht werden kann. Wird an dem Gehäusebereich 14 eine mit dem Schmiernippel. 22 gekoppelte, automatisch arbeitende Schmiervorrichtung angeschlossen, so ist der Nachschmiervorgang automatisierbar, indem mittels einer entsprechend eingerichteten Steuerung die Spindelmutter 18 in ihre Endstellung an der Anschlagfläche 21 verbracht und anschließend die Schmierfettversorgung ausgelöst wi.rd.

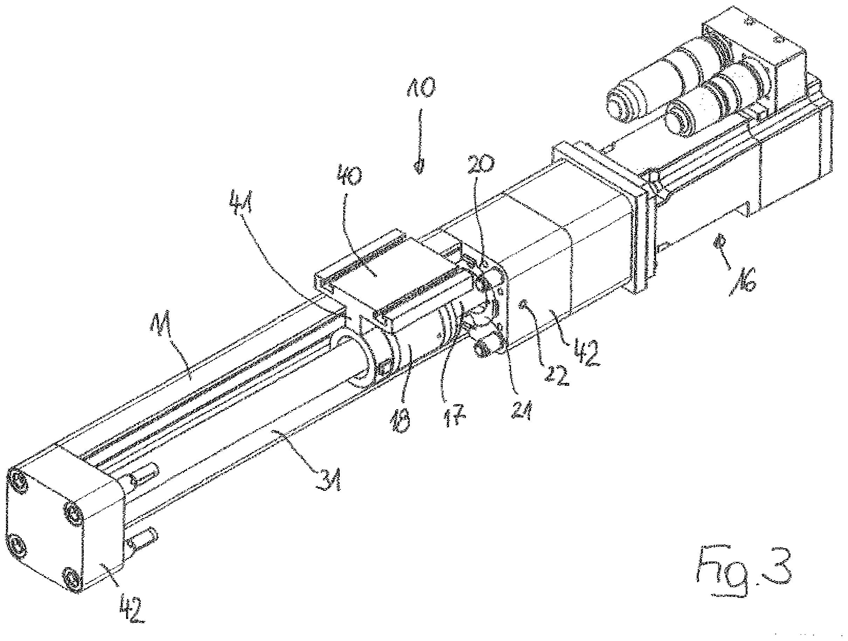

Das in Figur 3 dargestellte Ausführungsbeispiel unterscheidet sich von dem zuvor beschriebenen Ausführungsbeispiel, lediglich dadurch, dass anstelle der bei dem in Figur 1. darstellten Ausführungsbeispiel an der Spindelmutter 18 befestigten Kolbenstange als Funktionsteil nun ein auf einer Außenseite des Gehäuses 11 beweglicher Läufer 40 vorgesehen ist, der bei dem in Figur 3 dargestellten Ausführungsbeispiel mittels eines in den Gehäuseinnenraum 31 reichenden und hier mit der Spindelmutter 18 verbundenen Steges 41 mit der Spindelmutter 18 verbunden ist. Ein solcher Aufbau eines Linearantriebes ist ebenfalls im Stand der Technik bekannt, wobei zum Beispiel vorgesehen sein kann, dass die dem Läufer 40 benachbarte Wand des Gehäuses 11 einen Schlitz aufweist, durch welchen der Steg 41 in den Gehäuseinnenraum 31 reicht, wobei der Steg 41 in dem Schlitz beweglich ist. Der jeweils nicht von dem Steg 41 erfasste Bereich des Schlitzes kann dabei in einer bekannten Weise von einer mitlaufenden Abdeckung verschlossen sein. In einem solchen. Fall sind die beiden Stirnseiten des beispielsweise aus einem strang förmigen Gehäuseprofil bestehenden Gehäuses 11 durch endseitig an dem Gehäuseprofil befestigte Flansche 42 verschlossen. Wie sich dazu aus Figur 3 ohne weitere Erläuterung ergibt, eignet sich jeder der beiden Flansche 42 zur Aufnahme der Nachschmiervorrichtung, wie hier durch die Anordnung des Schmiernippels 22 in dem in der Darstellung der Figur 3 rechten Flansch 42 verdeutlicht ist. Die beiden Flansche 42 können zudem, zur Lagerung der Gewindespindel 17 herangezogen sein. Weiterhin ist in Abänderung zur Darstellung in Figur 1 bei dem in Figur 3 dargestellten Ausführungsbeispiel der Antrieb 16 für die Gewindespindel 17 in einer Linie bzw. Flucht mit dem Gehäuse 11 und der Gewindespindel 17 angeordnet, was jedoch, keinen Einfluss auf die Ausgestaltung der Erfindung hat.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Elektromechanischer Linearantrieb mit einem Gehäuse (11) und mit wenigstens einer in einem Gehäuseinnenraum (31) längsverschiebbar angeordneten Spindelmutter (18) als Träger eines daran befestigten Funktionsteiles, wobei die Spindelmutter (18) auf einer sich durch den Gehäuseinnenraum (31) erstreckenden, mittels eines Antriebes in eine Drehbewegung versetzbaren Gewindespindel (17) sitzt und durch die Drehbewegung der Gewindespindel (17) in dem Gehäuseinnenraum (31) hin und her verschiebbar ist, wobei in einem einen Endanschlag für die Bewegung der Spindelmutter (18) ausbildenden Gehäusebereich (14) ein an der Außenseite des Gehäuses (11) zugänglicher Schmiernippel (22) und wenigstens ein daran anschließender und in einer im Gehäuseinnenraum (31) gelegenen Anschlagfläche (21) für die Spindelmutter (18) mündender Schmierweg (23,24) angeordnet sind und in der Spindelmutter (18) wenigstens eine zu den Schmierstellen der Spindelmutter (18) führende Schmierleitung (25) angeordnet ist, **dadurch gekennzeichnet, dass** die Spindelmutter (18) für die Nachschmierung in eine durch die Anschlagfläche (21) definierte Position zu verfahren ist, in welcher die Schmierleitung (25) bei Anlage der Spindelmutter (18) an der Anschlagfläche (21) des Gehäuses (11) an dem gehäuseseitigen Schmierweg (23,24) angeschlossen ist und automatisch eine Verbindung zwischen der in der Spindelmutter (18) ausgebildeten Schmierleitung (25) und dem gehäuseseitigen Schmierweg (23, 24) besteht.

2. Elektromechanischer Linearantrieb nach Anspruch 1, **dadurch gekennzeichnet, dass** die Anschlagfläche (21) für die Spindelmutter (18) an einer gesonderten, an einer Stirnseite des die Spindelmutter (18) aufnehmenden Gehäuseinnenraums (31) in das Gehäuse (11) eingesetzten Püfferscheibe (20) ausgebildet und in der Pufferscheibe (20) eine Verbindungsbohrung (28) zur Verbindung des im Gehäusebereich (14) ausgebildeten Schmierweges (23,24) mit der in der Spindelmutter (18) ausgebildeten Schmierleitung (25) angeordnet ist.

3. Elektromechanischer Linearantrieb nach Anspruch 1 oder 2, **dadurch gekennzeichnet, dass** an dem im Gehäusebereich (14) angeordneten Schmiernippel (22) eine automatisch arbeitende Schmiervorrichtung anschließbar ist.

4. Elektromechanischer Linearantrieb nach einem der Ansprüche 1 bis 3, **dadurch gekennzeichnet, dass** das von der Spindelmutter (18) getragene Funktionsteil aus wenigstens einer einen stirnseitigen Gehäusedeckel (13) des Gehäuses (11) durchgreifenden, aus dem Gehäuse (11) einseitig hervorstehenden Kolbenstange (19) besteht.

5. Elektromechanischer Linearantrieb nach Anspruch 4, **dadurch gekennzeichnet, dass** der Schmiernippel (22) in dem dem die Kolbenstange (19) aufnehmenden Gehäusedeckel (13) gegenüberliegenden Gehäusebereich (14) angeordnet ist.

6. Elektromechanischer Linearantrieb nach einem der Ansprüche 1 bis 3, **dadurch gekennzeichnet, dass** das von der Spindelmutter (18) getragene Funktionsteil aus einem auf einer Außenseite des Gehäuses (11) beweglichen Läufer (40) besteht, der mittels eines in den Gehäuseinnenraum (31) reichenden Steges (41) mit der Spindelmutter (18) verbunden ist.

7. Elektromechanischer Linearantrieb nach Anspruch 6, **dadurch gekennzeichnet, dass** das aus einem strangförmigen Gehäuseprofil bestehende Gehäuse (11) an seinen, beiden Enden durch einen Stirnseitig an den Enden des Gehäuseprofils befestigten Flansch (42) verschlossen ist und der Schmiernippel (22) und der zur Anschlagfläche (21) für die Spindelmutter (18) führende Schmierweg (23, 24) in einem der beiden Flansche (42) ausgebildet ist.

## Claims

1. Electromechanical linear drive with a housing (11) and at least one spindle nut (18) that is arranged so as to be longitudinally movable in a housing interior (31) as support for a functional part fastened thereto, wherein the spindle nut (18) is seated on a threaded spindle (17) which extends through the housing interior space (31) and is caused to move in a rotary direction by means of a drive unit and wherein the spindle nut (18) is displaceable back and forth inside the housing interior space (31) by the rotary motion of the threaded spindle (17), wherein a lubricating nipple (22) that is accessible on the outside of the housing (11) and at least one lubricating path (23, 24) which adjoins said nipple and opens in a stop surface (21) for the spindle nut (18) located in the housing interior space (31) are arranged in a housing area (14) which forms an end stop for the motion of the spindle nut (18), and at least one lubricating line (25) leading to the lubrication points in the spindle nut (18) is arranged in the spindle nut (18), **characterized in that** the spindle nut (18) is to be moved into a position defined by the stop surface (21) for re-lubrication, in which position the lubricating line (25) is connected to the housing side lubricating path (23, 24) when the spindle nut (18) lies flush with the stop surface (21) of the housing (11) and a connection is created automatically between the lubricating line (25) formed in the spindle nut (18) and the housing-side lubricating path (23, 24).

2. Electromechanical linear drive according to Claim 1, **characterized in that** the stop surface (21) for the spindle nut (18) is formed on a separate buffer washer (20) that is inserted in the housing (11) on an end face of the housing interior space (31) which accommodates the spindle nut (18), and a connecting bore (28) is created in the buffer washer (20) for connecting the lubricating path (23, 24) that is formed in the housing area (14) with the lubricating line (25) that is formed in the spindle nut (18).

3. Electromechanical linear drive according to Claim 1 or 2, **characterized in that** an automatically operating lubricating device can be connected to the lubricating nipple (22) arranged in the housing area (14).

4. Electromechanical linear drive according to any one of Claims 1 to 3, **characterized in that** the functional part supported by the spindle nut (18) consists of at least one piston rod (19) which passes through a housing cover (13) on an end face of the housing (11) and protrudes from one side of the housing (11).

5. Electromechanical linear drive according to Claim 4, **characterized in that** the lubricating nipple (22) is disposed in the housing area (14) opposite the housing cover (13) which accommodates the piston rod (19).

6. Electromechanical linear drive according to any one of Claims 1 to 3, **characterized in that** the functional part supported by the spindle nut (18) consists of an armature (40) that is movable on an outer side of the housing (11) and which is connected to the spindle nut (18) via a web (41) which reached into the housing interior space (31).

7. Electromechanical linear drive according to Claim 6, **characterized in that** the housing (11) consisting of an elongated housing profile is closed at both ends by a flange (42) which is fastened to the front faces on the ends of the housing profile and the lubricating nipple (22) the lubricating path (23, 24) that leads to the stop surface (21) for the spindle nut (18) is formed on one of the two flanges (42).

## Revendications

1. Commande linéaire électromécanique comportant une enceinte (11) et au moins un écrou de broche (18) disposé de manière à être déplaçable longitudinalement dans un espace intérieur de l'enceinte (31) et faisant office de pièce fonctionnelle fixée dessus, l'écrou de broche (18) étant assis sur une broche filetée (17) pouvant être mise au moyen d'une commande en mouvement rotatif et étant déplaçable en va-et-vient par le mouvement rotatif de la broche filetée (17) dans l'espace intérieur de l'enceinte (31), étant disposés, dans une partie de l'enceinte (14) constituant une butée terminale pour le mouvement de l'écrou de broche (18), un graisseur (22) accessible au niveau de la face extérieure de l'enceinte (11) et une voie de graissage (23,24) débouchant dans une surface de butée (21) située dans l'espace intérieur de l'enceinte (31) pour l'écrou de broche (18) et, dans l'écrou de broche (18), au moins une conduite de graissage (25) menant aux points de graissage de l'écrou de broche (18), **caractérisée en ce que** l'écrou de broche (18) doit, pour le regraissage, être déplacé à une position définie par la surface de butée (21) et dans laquelle la conduite de graissage (25), lors du contact de l'écrou de broche (18) avec la surface de butée (21) de l'enceinte (11), est raccordée à la voie de graissage (23,24) située du côté de l'enceinte ,et qu'il existe une connexion entre la conduite de graissage (25) réalisée dans l'écrou de broche (18) et la voie de graissage (23,24) située du côté de l'enceinte.

2. Commande linéaire électromécanique selon la revendication 1, **caractérisée en ce que** la surface de butée (21) pour l'écrou de broche (18) est constituée au niveau d'un disque faisant tampon (20) spécial inséré sur une face avant de l'espace intérieur de l'enceinte (31) recevant l'écrou de broche (18) dans l'enceinte (11) et que, dans le disque faisant tampon (20), est pratiqué un alésage de connexion (28) destiné à connecter la voie de graissage (23,24) réalisée au niveau de l'enceinte (14) à la conduite de graissage (25) réalisée dans l'écrou de broche (18).

3. Commande linéaire électromécanique selon la revendication 1 ou 2, **caractérisée en ce qu'**un dispositif de graissage fonctionnant automatiquement peut être raccordé au graisseur (22) disposé au niveau de l'enceinte (14).

4. Commande linéaire électromécanique selon une des revendications 1 à 3, **caractérisée en ce que** la pièce fonctionnelle supportée par l'écrou de broche (18) est composée d'au moins une tige de piston (19) traversant un couvercle de l'enceinte (13) avant de l'enceinte (11) et dépassant unilatéralement de l'enceinte (11).

5. Commande linéaire électromécanique selon la revendication 4, **caractérisée en ce que** le graisseur (22) est disposé dans la zone de l'enceinte (14) opposée au couvercle de l'enceinte (13) recevant la tige de piston (19).

6. Commande linéaire électromécanique selon une des revendications 1 à 3, **caractérisée en ce que** la pièce fonctionnelle supportée par l'écrou de broche (18) est composée d'un rotor (40) mobile sur une face extérieure de l'enceinte (11) et qui est raccordé au moyen d'une traverse (41) allant jusque dans l'espace intérieur de l'enceinte (31) à l'écrou de broche (18).

7. Commande linéaire électromécanique selon la revendication 6, **caractérisée en ce que** l'enceinte (11) composée d'un profilé d'enceinte en forme de cordon est fermée à ses deux extrémités par une bride (42) fixée à l'avant aux extrémités du profilé d'enceinte et que le graisseur (22) et que la voie de graissage (23,24) menant à la surface de butée (21) pour l'écrou de broche (18) est réalisée dans une des deux brides (42).
